# EUROPÄISCHE PATENTSCHRIFT

(11) **EP 2 319 036 B1**
(45) Veröffentlichungstag und Bekanntmachung des Hinweises auf die Patenterteilung: **08.04.2020**
(21) Anmeldenummer: 09775781.9
(22) Anmeldetag: 01.09.2009
(51) Int. Cl.: F28G 7/00, G10K 15/04, G01V 1/116

(54) **VORRICHTUNG UND VERFAHREN ZUM ERZEUGEN VON EXPLOSIONEN**
APPARATUS AND METHOD FOR PRODUCING EXPLOSIONS
PROCÉDÉ ET DISPOSITIF DE GÉNÉRATION D'EXPLOSIONS

(30) Priorität: 04.09.2008 CH 14132008
(43) Veröffentlichungstag der Anmeldung: 11.05.2011
(73) Patentinhaber: Explo Engineering AG, 5622 Waltenschwil (CH); Rüegg, Hans, 5622 Waltenschwil (CH); Martin GmbH für Umwelt- und Energietechnik, 80807 München (DE); Hitachi Zosen Inova AG, 8005 Zürich (CH)
(72) Erfinder: RÜEGG, Hans, 5622 Waltenschwil (CH)
(74) Vertreter: Liebetanz, Michael
(86) Internationale Anmeldenummer: PCT/CH2009/000294
(87) Internationale Veröffentlichungsnummer: WO 2010/025574

(56) Entgegenhaltungen:
- WO-A1-01/78912
- WO-A2-2007/028264
- US-A- 3 429 396
- US-A- 3 670 840
- US-A- 3 981 379
- US-A- 4 047 591
- US-A- 4 487 179
- (Various authors): "Camshaft" WIKIPEDIA 26. Oktober 2010 (2010-10-26), XP002607943 Gefunden im Internet: URL:http://en.wikipedia.org/wiki/Camshaft [gefunden am 2010-11-02]

## Beschreibung

Die Erfindung betrifft ein Verfahren und eine Vorrichtung zur Erzeugung von Druckimpulsen mittels Explosionen, insbesondere von Druckimpulsen hoher Intensität gemäss den unabhängigen Patentansprüchen.

Es sind unterschiedliche Vorrichtungen zum Erzeugen Druckwellen und Druckimpulsen, beispielsweise zum Reinigen von Kesseln bekannt. Eine solche wird in WO2007/028264 beschrieben. Mit der darin gezeigten Vorrichtung ist es möglich Explosionen mit hoher Wiederholbarkeit zu erzeugen. Aufgabe der vorliegenden Erfindung ist es nun, eine spezielle Ausgestaltung dieser Art von Explosionsgenerator zu schaffen.

Die Aufgabe wird durch die Vorrichtung und das Verfahren gelöst, wie sie in den Patentansprüchen definiert sind.

Die Vorrichtung weist einen druckfesten Behälter mit einer Austrittsöffnung für die Druckimpulse und ein die Austrittsöffnung verschliessendes Verschlussmittel, beispielsweise einen Kolben oder einen Schieber, auf. Das Verschlussmittel wird durch eine Hilfsexplosion in seiner Position verschoben, derart, dass es die Austrittsöffnung freigibt. Verzögert zum Freigeben der Austrittsöffnung, wird eine Explosion in einer Hauptexplosionskammer im druckfesten Behälter gezündet, wobei der dadurch erzeugte Druckimpuls durch die nun zumindest teilweise offene Austrittsöffnung austritt. Hilfs- und Hauptexplosionskammer sind vorzugsweise im druckfesten Behälter eingebracht.

Zuerst erfolgt eine Zündung einer Hilfsexplosion. Diese wird durch eine Zündvorrichtung in oder an der Hilfsexplosionskammer vorgenommen. Verzögert zur Zündung der Hilfsexplosion erfolgt die Zündung der Hauptexplosion. Die Hilfs- und die Hauptexplosionskammer werden vorzugsweise durch das Verschlussmittel selber voneinander abgetrennt. Die Verzögerung der Hauptexplosion kann dadurch erfolgen, dass zeitlich verzögert, z.B. durch eine Verzögerungsschaltung, eine in oder an der Hauptexplosionskammer angebrachte Zündvorrichtung gezündet wird. Es ist aber auch möglich die Hilfsexplosion über eine zwischen Hilfs- und Hauptexplosionskammer installierte Verzögerungsleitung zu leiten. Dann weist die Hilfsexplosionskammer eine Zündvorrichtung auf und auf eine Zündvorrichtung in oder an der Hauptexplosionskammer kann verzichtet werden.

Die Austrittöffnung des druckfesten Behälters wird durch das Verschlussmittel geschlossen gehalten. Dies wird bevorzugt durch ein Federelement bewirkt. Das Federelement kann eine gewöhnliche Spiralfeder sein, wird jedoch bevorzugt durch eine Gasfeder gebildet. Ein solches Federelement bewirkt auch eine Rückführung des Verschlussmittels nach einer Explosion und erlaubt eine Wiederholbarkeit des Verfahrens.

In die Explosionskammern wird ein fliessfähiger, explosionsfähiger Stoff oder ein fliessfähiges, explosionsfähiges Gemisch, welches durch Vermischung von vorzugsweise an sich nicht explosionsfähigen Komponenten gebildet wird, eingeführt. Die fliessfähigen Stoffe und/oder Stoffgemische sind beispielsweise gasförmig, flüssig, puderförmig oder pulverförmig oder eine Mischung von solchen Komponentenstoffen., vorzugsweise besteht ein Gemisch aus zwei unter Druck stehenden Gasen. Im folgenden werden sämtliche Varianten und mögliche Kombinationen von Stoffen und Gemischen vereinfacht fliessfähiges explosionsfähiges Material genannt, ohne dass dies als Einschränkung auf einen einzelnen Stoff oder auf ein bestimmtes Gemisch gesehen wird.

Durch Zündung des fliessfähigen explosionsfähigen Materials in der Hauptexplosionskammer entsteht eine Explosion mit einem sehr hoher Gasdruck, welcher durch die zuvor und im wesentlichen bis kurz vor der Zündung des explosionsfähigen Materials, verschlossene Ablassöffnung abgeleitet wird. Die Ablassöffnung definiert dabei die Richtung der austretenden Druckwelle.

Das Verschlussmittel wird vorzugsweise so schnell geöffnet, dass das unter Druck stehende Gasgemisch in der Hauptexplosionskammer höchstens teilweise vor der eigentlichen Zündung durch die vom Verschlussmittel bereits teilweise geöffnete Ablassöffnung entweichen kann. D.h. ein Gasgemisch steht bei der Zündung dadurch weiterhin unter Druck und die erzeugten Explosionsdrücke sind entsprechend hoch. Bei Verwendung von beispielsweise Aethan und Sauerstoff in stöchiometrischem Verhältnis entsteht ein Explosionsdruck, der ca. 25 mal höher ist als ein Druck zum Zeitpunkt einer Zündung. Ein Ziel dieses Verfahrens ist es, Druckimpulse mit möglichst hoher Druckspitze zu erzeugen. Dazu wird das Verschlussmittel vorzugsweise mit maximaler Geschwindigkeit bewegt, so dass zum Zeitpunkt der Zündung der Hauptexplosion trotz offener Austrittsöffnung der Gasdruck noch möglichst hoch bleibt. Zur Erzeugung solch hoher Verschlussmittelgeschwindigkeit wird das, vorzugsweise ebenfalls unter Druck stehende, Gasgemisch in der Hilfsexplosionskammer zur Explosion gebracht. Dadurch wirkt der sehr hohe Hilfsexplosionsdruck auf das Verschlussmittel und beschleunigt dieses sehr stark. Die Bewegung des Verschlussmittels kann anschliessend von einem Federelement abgebremst werden.

Dadurch, dass ein Verschlussmittel die Ablassöffnung verschliesst und die Anordnung der Vorrichtung so ausgestaltet ist, dass durch das Zünden einer Hilfsexplosion das Verschlussmittel verschoben und damit direkt die Ablassöffnung freigegeben wird, kann die gesamte Vorrichtung sehr einfach aufgebaut werden. Insbesondere kann die Vorrichtung aus sehr wenigen Teilen aufgebaut sein. Ausser dem Verschlussmittel werden vorzugsweise keine anderen beweglichen Teile verwendet. Diese sind unter den hohen Belastungen, wie es beim Erzeugen von Explosionen dieser hohen Intensität der Fall ist, extremen Materialbelastungen ausgesetzt. Um eine Vorrichtung zu schaffen, welche ein repetitives Erzeugen von Explosionen erlaubt, ist es erforderlich bzw. von besonderem Vorteil ein möglichst geradlinig bewegendes Verfahren unter optimierter Schonung der speziell belasteten Teilen zu haben. Dies ist beim erfindungsgemässen Verfahren und der entsprechenden Vorrichtung der Fall.

In einer bevorzugten Ausführungsform der Vorrichtung sind die Hauptexplosionskammer und das Verschlussmittel derart im druckfesten Behälter angeordnet, dass der Fülldruck der Hauptexplosionskammer, also der Gasdruck, mit welchem die Explosionskammer mit fliessfähigem, explosionsfähigem Material vor dem Auslösen der Zündung gefüllt wird, senkrecht einer Bewegungsrichtung des Verschlussmittels wirkt. Dies weist den Vorteil auf, dass im vollständig geschlossenen Zustand der Vorrichtung ein Federelement nicht gegen diesen Fülldruck sondern nur gegen den Fülldruck in der Hilfsexplosionskammer wirken muss, also weder um eine Ablassöffnung geschlossen halten zu können, noch um gegen diese Kraft die Ablassöffnung freigeben zu können.

In einer Ausführungsform der Erfindung wird das Verschlussmittel nach einem anfänglichen Verschieben und Freigeben der Ablassöffnung, nachfolgend durch den Fülldruck bzw. den Explosionsdruck der Hauptexplosionskammer noch zusätzlich beschleunigt und nach hinten geschoben.

Bei Verwendung von zwei unabhängigen Zündvorrichtungen für Hilfs- und Hauptexplosion können die Fülldrücke und die Zusammensetzung des fliessfähigen explosionsfähigen Materials in Hilfs- und Hauptexplosionskammer voneinander verschieden sein. Im selben System sind damit unterschiedliche Explosionsdrücke für Antrieb und Druckimpuls erzeugbar, wodurch mit derselben Vorrichtung eine hohe Flexibilität in der Auslegung und der Verwendung der eingesetzten Mittel erreicht werden kann.

Durch eine geeignete Anordnung von Hilfs- und Hauptexplosionskammer und Gasfederkammer durch die Konstruktion des druckfesten Behälters und des darin angeordneten Verschlussmittels in der Funktion eines Ventils für die Ablassöffnung, können diese Kammern durch das einzige Verschlussmittel, welches bevorzugt als Kolben ausgestaltet ist, voneinander abgetrennt und vorzugsweise durch dieses auch abgedichtet werden.

Die Vorrichtung wird bevorzugt zum Reinigen von Kesseln in grossen Anlagen, wie Müllverbrennungsanlagen, Kohlekraftwerken, Silos, zum Beseitigen von Schlacken oder Ablagerungen etc. verwendet. Dort besteht der wesentliche Vorteil darin, dass die einzelnen Reinigungszyklen sehr schnell und mehrfach wiederholt werden können. Auch ist die Verwendung von Gasen als Reinigungsmaterial zur Erzeugung der Explosionen und damit verbundene Druckimpulse relativ günstig und es können hohe Explosionsdrücke erzeugt werden. Das Zuführen von an sich nicht explosionsfähigen Stoffen, zu einem Zeitpunkt kurz vor dem Auslösen der Explosion, erhöht zudem die Sicherheit von Mensch und Anlagen massiv. Auch ermöglicht es ein Reinigen bei noch warmer, oder in einer heissen, in Betrieb befindlichen Anlage, da keine explosiven Stoffe über längere Zeit der heissen Umgebung ausgesetzt sind. Die erzeugte Druckwelle kann dabei über ein Rohr über längere Distanzen in einen Kessel an die zu reinigende Stelle geleitet werden. Das Rohr kann fest an der zu reinigenden Anlage installiert sein, aber auch von aussen eingeführt werden, beispielsweise teleskopisch verschiebbar in eine Anlage oder einen Kessel geschoben werden. Durch den bei der Explosion erzeugten Druckimpuls werden Beläge und Verschmutzungen von den Kesselrohren und - wänden weggeblasen und gleichzeitig die Rohre bzw. Wände in Schwingung versetzt. Beide Aktionen bewirken ein effizientes Abreinigen der zu reinigenden Anlagen.

Verschiedene weitere Verwendungsmöglichkeiten sind denkbar, bei denen ein hoher, schneller Kraftstoss, Druckimpuls oder eine Druckwelle hoher Intensität und/oder (schnelle) Wiederholbarkeit benötigt wird. Beispiele sind Druckerzeuger für Druck-Blechumformung oder als Antrieb für Schusswaffen, bei denen der Druckimpuls zum Beschleunigen eines Projektils verwendet wird.

Da die Austrittsgeschwindigkeit der Explosionsgase aus der Austrittsöffnung und damit auch der erzeugte Schub grösser ist als bei einer kontinuierlichen Verbrennung in Raketenmotoren, ist auch die Nutzung des erfindungsgemässen Verfahrens und der Vorrichtung als Antrieb von Raumfahrzeugen oder als Puls-Detonation-Engine denkbar.

Im Folgenden wird die Erfindung anhand von beispielhaften Ausführungsformen dargestellt. Dabei zeigt
- Fig. 1: einen Explosionsgenerator mit zwei Zündvorrichtungen;
- Fig. 2: einen Explosionsgenerator mit Verzögerungsleitung;
- Fig. 3: einen Explosionsgenerator mit Schieber.

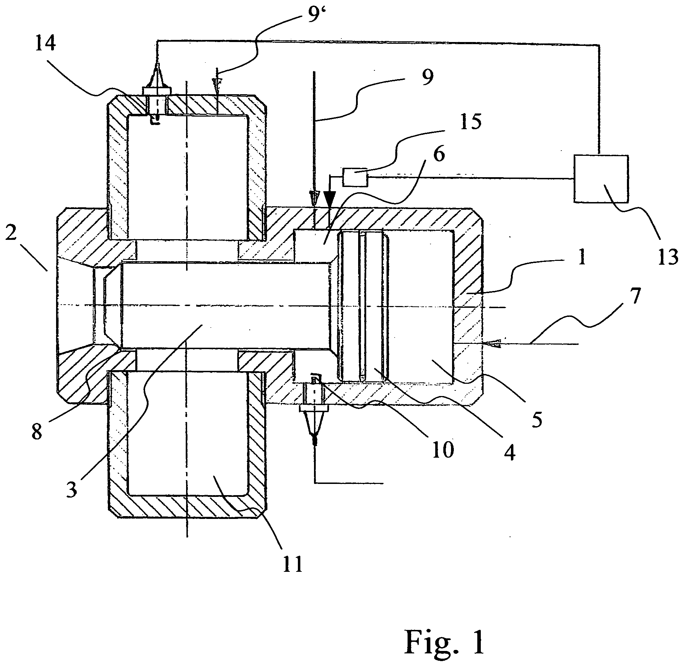

In **Figur 1** ist ein Explosionsgenerator mit druckfestem Behälter 1 und eine im Behälter befindliche Ablassöffnung 2 gezeigt. Ein im Behälter verschiebbar angeordneter Kolben 3 dient als Ventil zum Verschliessen und Geschlossenhalten der Ablassöffnung. Das hintere Ende 4 des Kolbens weist einen vergrösserten Durchmesser und eine Dichtung auf, derart, dass das hintere Ende vorzugsweise vollständig dicht an der inneren Behälterwand gleitet. Der druckfeste Behälter weist in einem hinteren Bereich eine erste Kammer auf, welche durch das hintere Ende des Kolbens in zwei Teilkammern unterteilt ist. Die eine Teilkammer ist die Gasfederkammer 5, die andere die Hilfsexplosionskammer 6. Die Gasfederkammer 5 wird mit einem Gas, z.B. Luft, Stickstoff, CO2 etc., gefüllt, welches Gas durch eine dafür vorgesehene Gaseinfüllöffnung 7 in die Gasfederkammer 5 geleitet wird. Durch den Gas- bzw. Schliessdruck in der Gasfederkammer wird das vorderste Ende des Kolbens 3, das Ventil, gegen den Ventilsitz 8 in der Ablassöffnung gedrückt. Dieser Schliessdruck ist so hoch, dass er den Kolben in eine Verschlussposition führen und dort zu halten vermag, auch gegen einen Fülldruck in der Hilfsexplosionskammer, und somit die Ablassöffnung sicher verschliesst.

Die Hilfsexplosionskammer 6 wird über eine Zufuhrleitung 9 mit einem explosiven Gemisch, z.B. Sauerstoff und Aethan, gefüllt. Das Zünden einer Hilfsexplosion in der Hilfsexplosionskammer geschieht über eine Zündvorrichtung 10, z.B. eine Zündkerze oder Glühkerze oder mittels eines leistungsfähigen Laserstrahls, der in die Vorrichtung geleitet wird. Durch den hohen Druck, der durch das Zünden des explosiven Gemischs in der Hilfsexplosionskammer 6 entsteht, wird der Kolben nach hinten, entgegen die Kraft der Gasfeder gedrückt und bewegt. Durch das Zurückschieben des Kolbens wird die Ablassöffnung 2 geöffnet und der Kolben nun aufgrund der Kraft des Fülldruckes in einer Hauptexplosionskammer 11 noch weiter beschleunigt und nach hinten bewegt.

Die Hauptexplosionskammer 11 ist im vorderen Teil des druckfesten Behälters angeordnet. Diese besteht in dieser Ausführungsform aus zwei seitlich, rechtwinklig zum Kolben angeordneten und einseitig geschlossenen Rohren. Die Rohre werden ebenfalls über eine Zufuhrleitung 9', gegebenenfalls auch über dieselbe wie die der Hilfsexplosionskammer, mit einem explosionsfähigen Material gefüllt. Das explosionsfähige Material für die Hauptexplosion ist vorzugsweise dasselbe wie dasjenige für die Hilfsexplosion. Der Fülldruck der Hauptexplosionskammer wirkt dabei im wesentlichen senkrecht auf den Kolben und hat in dieser Situation keinen Einfluss auf die Position desselben.

Beim Befüllen der beiden Explosionskammern können die für ein explosionsfähiges Gemisch verwendeten Stoffe nacheinander bis zu einem möglichst stöchiometrischen Verhältnis eingefüllt werden. Um eine gute Durchmischung zu erreichen, ist es auch möglich einzelne Stoffe im entsprechenden Verhältnis vorab in separate Druckbehälter mit demselben Druck einzufüllen und diese Stoffe aus den Druckbehältern in die Explosionskammern zu leiten.

Nach der Zündung der Hilfsexplosion mittels der Zündvorrichtung 10 registriert ein Drucksensor 15 einen Druckanstieg in der Hilfsexplosionskammer. Dieses Signal löst verzögert über einen Verzögerungsschalter 13, z.B. ein Zeitrelais, die Zündvorrichtung 14 in der Hauptexplosionskammer und somit die Hauptexplosion aus. Anstelle des externen Drucksensors kann auch der Kolbenweg selber die Zündung der Hauptexplosion auslösen, indem beispielsweise vom bewegenden Kolben ein Zündschalter betätigt wird. Es wäre auch möglich die beiden Zündvorrichtungen 10,14 der Hilfs- und Hauptexplosionskammer mittels einer Verzögerungsschaltung direkt zu verbinden. Die Steuerung der Verzögerung über einen Drucksensor oder einen Zündschalter garantiert jedoch, dass beispielsweise bei einer Fehlzündung in der Hilfsexplosionskammer keine Hauptexplosion bei noch geschlossener Ablassöffnung gezündet wird.

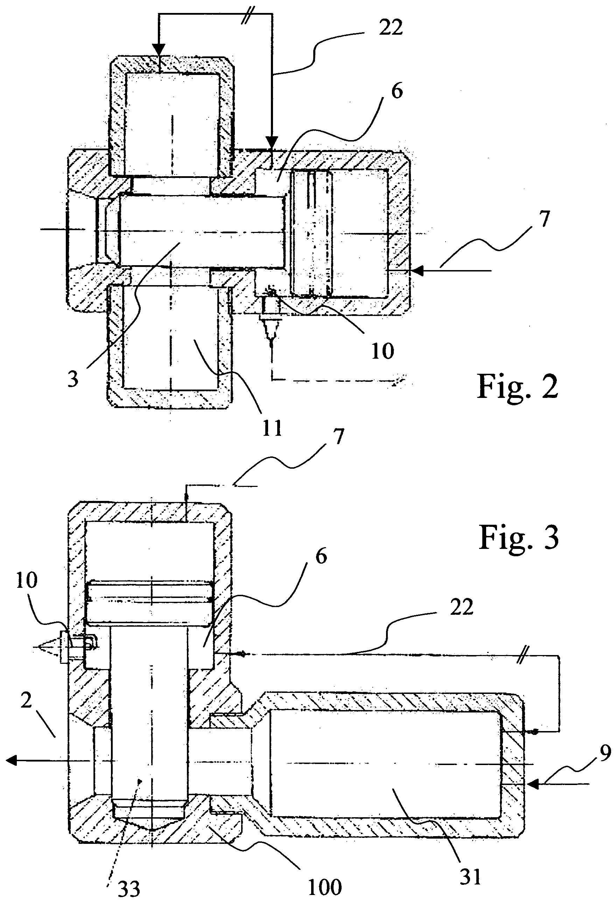

Es ist auch möglich eine Verzögerung durch eine Verzögerungsleitung 22 zu gestalten, wie dies in **Figur 2** gezeigt ist. Durch diese Verzögerungsleitung 22 oder Zündleitung, wird die Explosion von der Hilfsexplosionskammer 6 in die Hauptexplosionskammer 11 geleitet. Die Verzögerungszeit wird dann durch die Länge der Leitung sowie der Explosionsgeschwindigkeit bestimmt und in der Hauptexplosionskammer ist keine separate Zündvorrichtung erforderlich. Das Befüllen der Hauptexplosionskammer kann durch die Verzögerungsleitung 22 hindurch geschehen, so dass auch keine separate Zufuhrleitung in der Hauptexplosionskammer erforderlich ist. Im gezeigten Beispiel weist die Hauptexplosionskammer eine Zufuhrleitung 9 auf und die Hilfsexplosionskammer 6 wird über die Verzögerungsleitung gefüllt. Mit dieser Befüllmethode werden Hilfs- und Hauptexplosionskammer mit denselben Fülldrücken beaufschlagt.

Bei Verwendung von zwei Zündvorrichtungen werden vorzugsweise ,schnelle' Vorrichtungen, wie Zündkerzen oder Laserzündungen verwendet, da beide Zündungen präzis zu einem genauen Zeitpunkt erfolgen müssen. Auch bei einer Koordination von mehreren erfindungsgemässen Vorrichtungen sind solch schnelle Zündvorrichtungen bevorzugt. Mit dem Verwenden von mehreren parallel geschalteten Vorrichtungen, können sich gegenseitig verstärkende Effekte auftreten und genutzt werden. Beispielsweise können zur Reinigung von Grosskesseln durch gleichzeitiges Zünden mehrerer Explosionen in mehreren Explosionsgeneratoren die Druckwellen bzw. -impulse kumuliert werden, so dass dadurch die Reinigungswirkung verstärkt oder stattdessen die Anzahl der Reinigungsvorrichtungen verringert werden kann. Bei Verwendung einer Verzögerungsleitung und entsprechend nur einer Zündvorrichtung in einer Hilfsexplosionskammer, kann diese beispielsweise auch eine ,langsame' Glühkerze sein, welche wenige Sekunden, ca. 3s, zum Aufheizen benötigt. Eine neuartige Zündvorrichtung ist die Zündung mittels Laser, eine Laserzündung, welche als Zündvorrichtung in Explosions- oder Druckwellengeneratoren so noch nicht bekannt ist. Dabei wird ein Laserstrahl in den druckfesten Behälter eingekoppelt. Der Laserstrahl kann dabei direkt das Gas entzünden oder aber er erhitzt eine bestimmte Stelle der Oberfläche im Behälter, an welcher sich das im Behälter befindliche explosive Gas dann entzündet. Dazu weist der druckfeste Behälter ein für die entsprechende Laserwellenlänge durchgängiges Fenster auf. Vorteil dieser Vorrichtung ist, dass keine Zündelemente in der Kammer sind, welche Verschleiss unterliegen, verschmutzt werden oder durch die Explosion zerstört werden können. Auch sind keine elektrischen Durchführungen in den druckfesten Behälter erforderlich. Ein Laserstrahl kann auf sehr hohe Energiedichten fokussiert werden, ist sehr präzis, zeitlich sehr genau einstellbar und kann sogar Oberflächenverunreinigungen nutzen, welche bei anderen Zündvorrichtungen nachteilig wären.

Die auf den Kolben oder allgemein auf das Verschlussmittel wirkenden Kräfte und insbesondere die beim Entweichen der Druckwelle entstehende Wärme im Bereich Kolben-Ablassöffnung sind extrem hoch. Durch die Hilfsexplosion wird der Kolben vor der eigentlichen Explosion bereits aus dem Bereich der Ablassöffnung nach hinten verschoben und damit geschont. Gleichzeitig wird aber auch bewirkt, dass die erzeugte Druckwelle ungehindert und ungebremst die Vorrichtung verlassen kann. Die zeitliche Versetzung der beiden Explosionen liegt in einer bevorzugten Ausführungsform im Bereich von wenigen Millisekunden, vorzugsweise 0.2-10 Millisek, z.B. 0.5-2 Millisek.

Das Gas in der Gasfederkammer wird durch den zurückweichenden Kolben immer weiter komprimiert. Dadurch wird einerseits verhindert, dass der Kolben aufgrund der Explosion ungebremst an der Rückwand des Druckbehälters aufschlägt, andererseits wird der Kolben anschliessend wieder in seine Ausgangsposition, die Verschliessstellung der Ablassöffnung, gebracht, sobald die eigentliche Explosion vorbei ist. Damit ist die Vorrichtung nach einer Explosion automatisch wieder in der Ausgangsposition und das Explosionserzeugungsverfahren kann mit dem Befüllen der Kammern erneut gestartet werden.

In **Figur 3** ist ein Explosionsgenerator gezeigt, in welchem die Ablassöffnung 2 von einem Schieber 33 geschlossen gehalten wird. Die Hauptexplosionskammer 31 ist in Fluchtrichtung zur Ablassöffnung im druckfesten Behälter 100 angeordnet. Der Schieber bewegt sich parallel zur Ablassöffnungsebene bzw. senkrecht zur Ablassrichtung (Pfeil), welche durch die Ablassöffnung definiert ist. Das Prinzip der Hilfsexplosionskammer, Gasfederkammer und Schieber ist im wesentlichen gleich aufgebaut, wie mit dem Kolben gemäss Figur 2, wobei hier diese beiden Kammern senkrecht zur Ablassrichtung angeordnet sind. Der Schieber ist bevorzugt flach gestaltet, kann aber auch als Zylinder (Kolben) oder Vieleck ausgestaltet sein und einen Kolbenantrieb ausweisen bzw. direkt als solcher gestaltet sein. Nach einem Befüllen der Hilfs- und Hauptexplosionskammer über die gemeinsame Zufuhrleitung 9 wird eine Zündung in der Hilfsexplosionskammer mit Hilfe einer Zündvorrichtung 10 ausgelöst. Die Explosion wird anschliessend über eine Verzögerungsleitung 22 in die Hauptexplosionskammer 31 geleitet.

Im folgenden sind einige beispielhafte Werte für eine Vorrichtung zur Erzeugung von Explosionen angegeben:

| | |
|---|---|
| - Volumen Hauptexplosionskammer: | 1-3 lt |
| - Gas-Fülldruck (Explosionskammern): | 10-30 bar, z.B. 15-25 |
| - Durchmesser Ablassöffnung: | 40-80 mm |

## Patentansprüche

1. Vorrichtung zur Erzeugung von Druckimpulsen mittels Explosionen, aufweisend einen druckfesten Behälter (1, 100) mit einer darin eingebrachten Hauptexplosionskammer (11, 31) und einer Hilfsexplosionskammer (6) mit einer Zündvorrichtung (10, 14), weiter aufweisend mindestens eine Zufuhrleitung (9, 9') zum Zuführen eines fliessfähigen explosionsfähigen Materials, und eine Ablassöffnung (2) zum gerichteten Ablassen eines durch die Zündung des explosionsfähigen Materials in der Hauptexplosionskammer erzeugten Druckimpulses, weiter aufweisend ein die Ablassöffnung verschliessendes Verschlussmittel, welches durch die Druckkraft einer Explosion in der Hilfsexplosionskammer die Ablassöffnung wenigstens teilweise freigibt, und mit einem Verzögerungsmittel zwischen Haupt- und Hilfsexplosionskammer zum verzögerten Zünden einer Hauptexplosion in der Hauptexplosionskammer, derart, dass zum Zeitpunkt der Hauptexplosion die Ablassöffnung zumindest teilweise geöffnet ist,
**dadurch gekennzeichnet, dass**
die Druckkraft der Explosion in der Hilfsexplosionskammer auf das Verschlussmittel wirkt und das Verschlussmittel so in seiner Position verschiebbar ist und die Ablassöffnung wenigstens teilweise freigibt,
wobei die Hauptexplosionskammer (11,31) und das die Ablassöffnung (2) verschliessende Verschlussmittel so angeordnet sind, dass ein Gasdruck in der Hauptexplosionskammer senkrecht zur Bewegungsrichtung des Verschlussmittels auf das Verschlussmittel wirkt.

2. Vorrichtung nach Anspruch 1, wobei der druckfeste Behälter (1) ein Federelement aufweist, mit welcher das Verschlussmittel in einer Verschlussposition der Ablassöffnung (2) haltbar und in diese zurückführbar ist.

3. Vorrichtung nach Anspruch 2, wobei das Federelement eine Gasfeder in einer mit Gas gefüllten Gasfederkammer (5) ist.

4. Vorrichtung nach einem der Ansprüche 1 bis 3, wobei die Hauptexplosionskammer (11,31) eine Zündvorrichtung (10,14) aufweist.

5. Vorrichtung nach einem der Ansprüche 1 bis 4, wobei das Verzögerungsmittel ein Zeitrelais ist, welche die Zündvorrichtung (10,14) auslöst.

6. Vorrichtung nach einem der Ansprüche 1 bis 4, wobei das Verzögerungsmittel eine Verzögerungsleitung (22) zwischen Hilfs- und Hauptexplosionskammer (6,11,31) ist, zum Leiten der Explosion in die Hauptexplosionskammer.

7. Vorrichtung nach einem der Ansprüche 1 bis 6, wobei das Verschlussmittel ein Schieber (33) ist und die Hauptexplosionskammer (11,31) parallel zu einer durch die Ablassöffnung (2) definierten Ablassrichtung angeordnet ist.

8. Vorrichtung nach einem der Ansprüche 1 bis 6, wobei das Verschlussmittel ein Kolben (3) ist und die Hauptexplosionskammer (11,31) senkrecht zu einer durch die Ablassöffnung (2) definierten Ablassrichtung angeordnet ist.

9. Vorrichtung nach einem der vorangehenden Ansprüche, wobei die Zündvorrichtung (10,14) eine Zündkerze, eine Glühkerze oder eine Laserzündung ist.

10. Verfahren zur Erzeugung von Druckimpulsen mittels Explosionen, mit den folgenden Schritten:
Führen eines Verschlussmittels in eine Verschlussposition einer Ablassöffnung (2) in einem druckfesten Behälter (1,100) in welcher das Verschlussmittel die Ablassöffnung verschliesst;
Befüllen einer Haupt- und Hilfsexplosionskammer (6, 11, 31) im druckfesten Behälter mit einem fliessfähigen explosionsfähigen Material;
Zünden des fliessfähigen explosionsfähigen Materials in der Hauptexplosionskammer (11, 13) und dadurch Erzeugen eines Druckimpulses, welcher über die geöffnete Ablassöffnung gerichtet abgelassen wird,
wobei
vor dem Zünden in der Hauptexplosionskammer das fliessfähige, explosionsfähige Material in der Hilfsexplosionskammer (6) zur Explosion gebracht wird, und dass die Druckkraft der Hilfsexplosion derart auf das Verschlussmittel wirkt, dass das Verschlussmittel bewegt und in seiner Position verschoben wird, **dadurch gekennzeichnet dass** zum Zeitpunkt der Hauptexplosion die Ablassöffnung zumindest teilweise geöffnet ist, wobei ein Gasdruck in der Hauptexplosionskammer senkrecht zur Bewegungsrichtung des Verschlussmittels auf das Verschlussmittel wirkt.

11. Verfahren nach Anspruch 10, wobei das Verschlussmittel mittels eines Federelements, welches vorzugsweise eine Gasfeder ist, in einer Verschlussposition gehalten und dorthin rückgeführt wird, auch ohne Druckbeaufschlagung der Haupt- und/oder Hilfsexplosionskammer (11,31,6).

12. Verfahren nach Anspruch 10 oder 11, wobei eine Verzögerung zwischen der Zündung der Hilfsexplosion und der Hauptexplosion weniger als 10 msek, vorzugsweise 0.5-2 msek beträgt.

13. Verfahren nach einem der Ansprüche 10 bis 12, wobei ein freigesetzter Druckimpuls über ein Rohr an eine Wirkungsstelle geleitet wird.

14. Verfahren nach einem der Ansprüche 10 bis 13, wobei als fliessfähiges, explosionsfähiges Material ein Gemisch aus einem gasförmigen Kohlenwasserstoff und Sauerstoff verwendet wird.

15. Verfahren nach einem der Ansprüche 10 bis 14, wobei als fliessfähiges, explosionsfähiges Material ein Gasgemisch mit einem Druck von mindestens 2 bar, vorzugsweise 15 - 25 bar, verwendet wird.

## Claims

1. Apparatus for generating pressure pulses by means of explosions, comprising a pressure-resistant container (1, 100) with a main explosion chamber (11, 31) incorporated therein and an auxiliary explosion chamber (6) with an ignition device (10, 14), further comprising at least one supply line (9, 9') for supplying a flowable explosive material, and a discharge opening (2) for the directed discharge of a pressure pulse generated by the ignition of the explosive material in the main explosion chamber, further comprising a closure means which closes the discharge opening and which at least partially releases the discharge opening by the pressure force of an explosion in the auxiliary explosion chamber, and having a delay means between the main and auxiliary explosion chamber for delayed ignition of a main explosion in the main explosion chamber, in such a way that at the time of the main explosion the discharge opening is at least partially open, **characterized in that** the pressure force of the explosion in the auxiliary explosion chamber acts on the closure means and **in that** the closure means is thus displaceable in its position and at least partially opens the discharge opening, wherein the main explosion chamber (11, 31) and the closure means closing the discharge opening (2) being arranged in such a way that a gas pressure in the main explosion chamber acts on the closure means perpendicularly to the direction of movement of the closure.

2. Apparatus according to claim 1, wherein the pressure-resistant container (1) has a spring element with which the closure means can be held in a closed position of the discharge opening (2) and can be returned into this.

3. Apparatus according to claim 2, wherein the spring element is a gas spring in a gas-filled gas spring chamber (5).

4. Apparatus according to any one of claims 1 to 3, wherein the main explosion chamber (11, 31) has an ignition device (10, 14).

5. Apparatus according to any one of claims 1 to 4, wherein the delay means is a time relay which triggers the ignition device (10,14).

6. Apparatus according to any one of claims 1 to 4, wherein the delay means is a delay line (22) between the auxiliary and main explosion chambers (6, 11, 31) for directing the explosion into the main explosion chamber.

7. Apparatus according to any one of claims 1 to 6, wherein the closure means is a slide (33) and the main explosion chamber (11,31) is arranged parallel to a discharge direction defined by the discharge opening (2).

8. Apparatus according to any one of claims 1 to 6, wherein the closure means is a piston (3) and the main explosion chamber (11, 31) is arranged perpendicular to a discharge direction defined by the discharge opening (2).

9. Apparatus according to any of the foregoing claims, wherein the ignition device (10, 14) is a spark plug, a glow plug or a laser ignition.

10. Method for generating pressure pulses by means of explosions, comprising the following steps:
guiding a closure means into a closing position of a discharge opening (2) in a pressure-resistant container (1,100) in which the closure means closes the discharge opening;
filling a main and an auxiliary explosion chamber (6, 11, 31) in the pressure-resistant container with a flowable explosive material;
igniting the flowable explosive material in the main explosion chamber (11, 13) and thereby generating a pressure pulse which is discharged in a directed manner via the opened discharge opening, wherein the flowable explosive material is being caused to explode in the auxiliary explosion chamber (6) before ignition in the main explosion chamber, and wherein the pressure force of the auxiliary explosion acts on the closure means in such a way that the closure means is moved and displaced in its position **characterized in that** at the time of the main explosion the discharge opening is at least partially opened, wherein a gas pressure in the main explosion chamber is acting on the closure means perpendicularly to the direction of movement of the closure means.

11. Method according to claim 10, wherein the closure means is held in a closure position by means of a spring element, which is preferably a gas spring, and is returned in that position, even without pressurisation of the main and/or auxiliary explosion chamber (11, 31, 6).

12. Method according to claim 10 or 11, wherein a delay between the ignition of the auxiliary explosion and the main explosion is less than 10 msec, preferably 0.5-2 msec.

13. Method according to any one of claims 10 to 12, wherein a released pressure pulse is conducted via a tube to a point of action.

14. Method according to any one of claims 10 to 13, wherein a mixture of a gaseous hydrocarbon and oxygen is used as flowable, explosive material.

15. Method according to any one of claims 10 to 14, wherein a gas mixture with a pressure of at least 2 bar, preferably 15 - 25 bar, is used as the flowable, explosive material.

## Revendications

1. Dispositif pour générer des impulsions de pression au moyen d'explosions, comprenant un récipient résistant à la pression (1, 100) avec une chambre d'explosion principale (11, 31) incorporée dans celui-ci et avec une chambre d'explosion auxiliaire (6) avec un dispositif d'allumage (10, 14), comprenant en outre au moins une conduite d'alimentation (9, 9') pour l'alimentation d'un matériau explosif fluide, et une ouverture de décharge (2) pour la décharge dirigée d'une impulsion de pression générée par l'allumage du matériau explosif dans la chambre d'explosion principale, comprenant en outre un moyen de fermeture qui ferme l'ouverture de décharge et qui libère au moins partiellement l'ouverture de décharge par la force de pression d'une explosion dans la chambre d'explosion auxiliaire, et comportant un moyen de retardement entre la chambre d'explosion principale et la chambre d'explosion auxiliaire pour retarder l'allumage d'une explosion principale dans la chambre d'explosion principale, de telle sorte qu'au moment de l'explosion principale, l'ouverture de décharge soit au moins partiellement ouverte, **caractérisé en ce que** la force de pression de l'explosion dans la chambre d'explosion auxiliaire agit sur le moyen de fermeture et que le moyen de fermeture est ainsi déplaçable dans sa position et ouvre au moins partiellement l'ouverture de décharge, **en ce que** la chambre d'explosion principale (11, 31) et **en ce que** le moyen de fermeture fermant l'ouverture de décharge (2) sont disposés de telle sorte qu'une pression de gaz dans la chambre d'explosion principale agit sur le moyen de fermeture perpendiculairement à la direction de déplacement de la fermeture.

2. Dispositif selon la revendication 1, dans lequel le récipient résistant à la pression (1) présente un élément de ressort avec lequel le moyen de fermeture peut être maintenu dans une position fermée de l'ouverture de décharge (2) et peut être ramené dans celle-ci.

3. Dispositif selon la revendication 2, dans lequel l'élément de ressort est un ressort à gaz dans une chambre de ressort à gaz remplie de gaz (5).

4. Dispositif selon l'une quelconque des revendications 1 à 3, dans lequel la chambre d'explosion principale (11, 31) comporte un dispositif d'allumage (10, 14).

5. Dispositif selon l'une quelconque des revendications 1 à 4, dans lequel le moyen de retardement est un relais temporisé qui déclenche le dispositif d'allumage (10,14).

6. Dispositif selon l'une quelconque des revendications 1 à 4, dans lequel le moyen de retardement est une ligne de retard (22) entre les chambres d'explosion auxiliaire et principale (6, 11, 31) pour diriger l'explosion dans la chambre d'explosion principale.

7. Dispositif selon l'une quelconque des revendications 1 à 6, dans lequel le moyen de fermeture est un curseur (33) et la chambre d'explosion principale (11, 31) est disposée parallèlement à une direction de décharge définie par l'ouverture de décharge (2).

8. Dispositif selon l'une quelconque des revendications 1 à 6, dans lequel le moyen de fermeture est un piston (3) et la chambre d'explosion principale (11, 31) est disposée perpendiculairement à une direction de décharge définie par l'ouverture de décharge (2).

9. Dispositif selon l'une quelconque des revendications précédentes, dans lequel le dispositif d'allumage (10, 14) est une bougie d'allumage, une bougie de préchauffage ou un allumage laser.

10. Méthode pour générer des impulsions de pression au moyen d'explosions, comprenant les étapes suivantes :
Guider un moyen de fermeture dans une position de fermeture d'une ouverture de décharge (2) dans un récipient résistant à la pression (1, 100) dans lequel le moyen de fermeture ferme l'ouverture de décharge ;
remplir une chambre d'explosion principale et auxiliaire (6, 11, 31) dans le conteneur résistant à la pression avec un matériau explosif fluide ;
allumer le matériau explosif fluide dans la chambre d'explosion principale (11, 13) et ainsi générer d'une impulsion de pression qui est déchargée de manière dirigée par l'ouverture de décharge ouverte, où le matériau explosif fluide est amenée à exploser dans la chambre d'explosion auxiliaire (6) avant d'être enflammée dans la chambre d'explosion principale, et en ce que la force de pression de l'explosion auxiliaire agit sur le moyen de fermeture de telle sorte que le moyen de fermeture est déplacé, **caractérisée en ce qu'**au moment de l'explosion principale l'ouverture de décharge est au moins partiellement ouverte, où une pression de gaz dans la chambre d'explosion principale agit sur le moyen de fermeture perpendiculairement à la direction de déplacement du moyen de fermeture.

11. Méthode selon la revendication 10, dans laquelle le moyen de fermeture est maintenu dans une position de fermeture au moyen d'un élément de ressort, qui est de préférence un ressort à gaz, et y est ramené, même sans pressurisation de la chambre d'explosion principale et/ou auxiliaire (11, 31, 6).

12. Méthode selon la revendication 10 ou 11, dans laquelle un délai entre l'allumage de l'explosion auxiliaire et l'explosion principale est inférieur à 10 msec, de préférence 0,5-2 msec.

13. Méthode selon l'une quelconque des revendications 10 à 12, dans laquelle une impulsion de pression libérée est conduite par un tube jusqu'à un point d'action.

14. Méthode selon l'une quelconque des revendications 10 à 13, dans laquelle un mélange d'un hydrocarbure gazeux et d'oxygène est utilisé comme matériau explosif fluide.

15. Méthode selon l'une quelconque des revendications 10 à 14, dans laquelle un mélange de gaz ayant une pression d'au moins 2 bars, de préférence 15 - 25 bars, est utilisé comme matériau explosif fluide.
